Europäisches Patentamt

European Patent Office

Office européen des brevets

(19)

(11) Publication number: **0 165 342**

**A1**

(12) # EUROPEAN PATENT APPLICATION

(21) Application number: **84200743.7**

(22) Date of filing: **23.05.84**

(51) Int. Cl.⁴: **G 01 M 3/20**

(43) Date of publication of application:
**27.12.85 Bulletin 85/52**

(84) Designated Contracting States:
**CH DE FR GB LI SE**

(71) Applicant: **VARIAN S.p.A.**
**Via Varian 54**
**I-10040 Leini (Torino)(IT)**

(72) Inventor: **Dolcino, Luigi**
**Via Vassalli Eandi 17**
**I-10100 Turin(IT)**

(72) Inventor: **Psacharopulo, Andrea**
**Via Genovesi, 7**
**I-10100 Turin(IT)**

(74) Representative: **Robba, Eugenio**
**Studio "INTERPATENT" via Caboto 35**
**I-10129 Turin(IT)**

(54) **Method and apparatus for detecting leaks in pressurized objects and containers.**

(57) Method of checking leaks in pressurized objects and containers in the presence of a tracer gas by placing them in a sealed chamber which is then evacuated by a vacuum pump at the exhaust of which the tracer gas is detected by the sensor of a leak detector at atmospheric pressure.

An apparatus adapted for carrying out the method substantially comprises a sealed chamber (10), a mechanical pump (14) connected thereto, and a sensor (11) of a leak detector arranged at the exhaust of the mechanical pump (14).

A preferred tracer gas is helium, with a mass spectrometer leak detector.

FIG.1

EP 0 165 342 A1

"Method and apparatus for detecting leaks in pressurized objects and containers"

The present invention relates to a method of detecting leaks in pressurized objects and containers, and an apparatus suitable for carrying out this method.

More particularly, the method and apparatus according to the invention are based on the use of a tracer gas contained in the pressurized object to be checked, and on the identification of any leaks by detecting the tracer gas leaving the object.

The need to make checks for leaks in manufactured containers has arisen in the past in the restricted field of rather sophisticated apparatus and plants and has then extended to various branches of production until it has become a methodology of testing the hermetic tightness of manufactures produced on an industrial scale, such as refrigerating circuit elements, liquid and gas containing receptacles, beverage and food containing tins, etc.

Many methods based on the use of tracer gas are known for detecting leaks.

A method of detecting leaks at present in use is that of "accumulation" which consists in placing in a chamber the object to be checked after it has been pressurized with helium or a gas containing helium and to detect then any increase in the concentration of helium in the space between the object and the chambers by a probe of a mass spectrometer leak detector.

However, this method has a great disadvantage which consists in the response time of the system, which may be very long, and therefore it is unsuitable for industrial use. In fact, any gas escaped from the object is detected when it has "accumulated" in said space until it has reached a minimum concentration that can be detected by the measuring instrument, requiring a time which may be some minutes so that it does not permit an advantageous industrial application of the method.

It is the object of the present invention to eliminate or reduce the above-mentioned disadvantage by providing a method and apparatus for detecting leaks in pressurized objects and containers, which have a minimum response time and therefore can be advantageously used for industrial checking in large series.

This and other objects and advantages of the invention, which will appear from the following description, are achieved by a method of detecting leaks in pressurized objects and containers, characterized by comprising the steps of:

a) placing in a sealed chamber the object to be checked after it has been pressurized with the tracer gas or a mixture containing the tracer gas;

b) producing in said chamber a medium-low vacuum;

c) detecting by appropriate means the presence of the tracer gas in the gas flow discharged at atmospheric pressure by the pump used to evacuate said chamber.

A preferred tracer gas is helium and a typical level of vacuum is in the range from 500 to 1 mbar.

The invention further relates to the apparatus for carrying out this method, which is characterized in that it substantially comprises a sealed chamber for accommodating the object to be checked, a mechanical vacuum pump connected to said chamber, and a probe of a leak detector arranged in the vicinity of the exhaust of said mechanical pump in the gas flow discharged therefrom.

A preferred embodiment of the invention, given by way of a non-limiting illustrative example, will now be described with reference to the accompanying drawings, in which:

- Fig. 1 is a schematic view of an embodiment of the apparatus according to the invention; and

- Fig. 2 is an enlarged sectional view of a detail of Fig.1.

In the following detailed description also the detecting method, although it is completely general, will be described with reference to the drawings which illustrate a preferred embodiment of the invention.

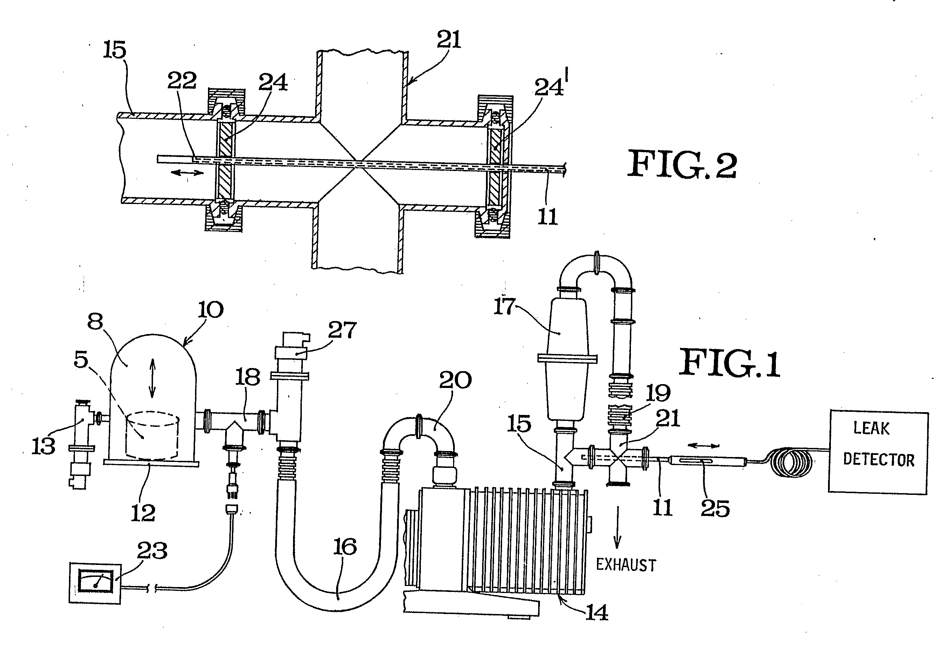

Referring to Fig. 1, 10 is a bell jar defining together with the bottom 12 a chamber in which the object 5 to be checked, shown in dash-and-dot lines, is placed. Thus an intermediate space 8 is defined between the object and the bell jar. The bell jar 10 can be periodically lifted and lowered to permit the introduction and withdrawal of the objects to be checked. Connected to the bell jar 10 through a hose 16 is a mechanical vacuum pump 14, a union tee 18 and a union elbow 20. Further, a vacuum meter 23 and a roughing valve 27 are connected to the union tee 18. Moreover, the bell jar 10 is connected to a valve 13 for the re-introduction of air. A probe 11 for sensing the tracer gas contained in the object 5 is placed in the vicinity of the exhaust of the mechanical pump. The probe 11 is connected to a leak detector which, if the tracer gas is helium, is of the mass spectrometer type as is known in the art. The probe 11 is provided with an audiovisual leak indicator 25 known per se.

It has been found advantageous, although not indispensable, to provide at the outlet of the mechanical pump means for purification of the discharged gas and means adapted to permit zero setting of the leak detector on the basis of the content of any tracer gas which may be present in the apparatus and/or the atmosphere, even in the absence of leaks in the object to be checked.

For this purpose a union tee 15 is mounted at the outlet of the pump and is connected by one way to a filter 17 followed by a hose 19 and a cross 21 which is also directly connected to the other way of the union tee 15.

The probe 11 is horizontally inserted in the cross 21, which is shown in detail in Fig.2, and is translatable to a certain extent in the horizontal direction.

The end portion of the probe 11 is constituted by a hollow rod communicating with the outside through an aperture 22 made therein slightly before its end. The two horizontal ways of the cross 21 are sealed by diaphragms 24, 24' with central holes for the passage of the probe 11, likewise in a sealed manner. The horizontal translation of the probe 11 permits to move the aperture 22 from one side to the other of the diaphragm 24 to bring the inside of the probe, and the leak detector connected thereto, into communication either with the gas present in the union tee 15 or with the gas present in the cross 21 for purposes which will be described hereinafter.

The operation of the described apparatus permits the leak detecting method according to the invention to be carried out in an advantageous manner.

After lifting the bell jar 10, which may also be done automatically, the object to be checked is placed on the bottom 12 after it has been pressurized by the tracer gas, for example, helium or a gaseous mixture containing helium. Then the bell jar 10 is lowered and the valve 13 for re-introduction of air is closed: consequently the roughing valve 27 will be opened as the mechanical pump 14 will always be running during operation. Thus, the evacuation of the intermediate space 8 begins and tracer gas may begin to escape from the object 5. The vacuum gauge 23 measures the residual pressure in the intermediate space 8.

Typically the existence of a great leak in the object 5 is revealed by the impossibility of reaching the predetermined pressure within the normal time. In this case the cycle must be interrupted, the valve 27 be closed and the valve 13 be opened. However, when the predetermined pressure is reached in the normal time there is no leak in the object 5 or the leak is not great.

By positioning the aperture 22 to the left of the diaphragm 24 the response of the detector can be reset to zero on the basis of the tracer gas which under normal conditions may be present in the atmosphere or in the apparatus itself or at the beginning of the test so that the signal will be activated only when this "normal" concentration of tracer gas is exceeded due to the presence of leaks in the object.

When the predetermined pressure is reached, the probe is translated to the right with the aperture 22 located in the gas flow coming from the filter 17. Under this condition the reading of the leak signal is effected by means of the audiovisual indicator. If this signal is below the predetermined value, the object is good, otherwise it has to be rejected because of a small leak.

When the reading is finished, the probe has to be returned to the initial position with the aperture 22 on the left of the diaphragm 24. Then the valve 27 is opened and the valve 13 is closed, after which the bell jar 10 can be lifted for withdrawal of the checked object and the introduction of a new object to be checked.

The cycle is repeated for each object to be checked for leaks. The various movements, for example, lifting and lowering of the bell jar, may be automated.

The apparatus which has been illustrated schematically may be constructed in an extremely compact and even portable form.

For a better understanding of the advantages of the method according to the invention, and the apparatus which permits to carry it out advantageously, it is appropriate to make a comparison between the times required by the so-called "accumulation" leak test referred to in the beginning and the typical times of the test described above.

Assuming that the object to be checked shows a leak of $1 \times 10^{-5}$ mbar x 1/sec of helium and the volume of the intermediate space (dead volume) is two litres, the partial pressure of helium in the air (at atmospheric pressure) of the intermediate space increases by $\frac{1 \times 10^{-5}}{2}$ mbar/sec = $5 \times 10^{-6}$ mbar:sec and the concentration by $\frac{5 \times 10^{-6}}{1000}$ 1/sec = $5 \times 10^{-3}$ ppm:sec. It will thus be evident that for reaching a concentration of 1 ppm, which is the minimum concentration that can be reasonably detected, one has to wait 200 seconds, which is a time that is obviously unacceptable for industrial checking in series.

With the method and apparatus according to the invention, still referring to the leak of the above example, when the pressure of the intermediate space is reduced by the mechanical pump to 1/10 of an atmosphere = 100 mbar, the concentration of helium contained therein, and thus also at the outlet of the mechanical pump, varies by $5 \times 10^{-2}$ ppm/sec, and to reach 1 ppm 20 seconds are required. When the pressure is reduced to 10 mbar, one has to wait only two seconds.

Thus, by producing a medium low vacuum, a drastic fall in the waiting times of reading is obtained.

A preferred embodiment of the invention has been described, but it is obvious that this is susceptible of modifications and variations within the scope of the inventive idea as defined by the appended claims.

CLAIMS

1. Method of detecting leaks in pressurized objects and containers, characterized by comprising the steps of:

a) placing in a sealed chamber the object to be checked after it has been pressurized with the tracer gas or a mixture containing the tracer gas;

b) producing in said chamber a medium low vacuum;

c) detecting by appropriate means the presence of the tracer gas in the gas flow discharged at atmospheric pressure by the pump used to evacuate said chamber.

2. Method of detecting leaks according to the preceding claim, characterized in that the vacuum mentioned under point b) is between 500 and 1 mbar.

3. Method of detecting leaks according to the preceding claims, characterized in that the tracer gas is helium.

4. Apparatus for detecting leaks in pressurized objects and containers, characterized in that it substantially comprises a sealed chamber for accommodating the object to be checked, a mechanical vacuum pump connected to said chamber, and a probe of a leak detector arranged in the vicinity of the exhaust of said mechanical pump in the gas flow discharged therefrom.

5. Apparatus for detecting leaks according to the preceding claim, characterized in that said leak detector is of the mass spectrometer type.

6. Apparatus for detecting leaks according to claim 4, characterized in that it further comprises a valve for re-introduction of air, connected to said bell jar and a roughing valve arranged in the connection line between said bell and said mechanical pump.

7. Apparatus for detecting leaks according to claim 4, characterized in that it further comprises a gas purification filter arranged downstream of the exhaust of the mechanical pump, and appropriate means for positioning the end of the probe in the gas flow upstream and downstream of said purification filter.

8. Apparatus for detecting leaks according to claim 7, characterized in that said means for posisioning the end of the probe comprises a cross whose two horizontal ways are sealed by diaphragms with central holes for the passage of said probe, said cross being mounted downstream of said purification filter with one of said horizontal ways which communicates directly with the gas flow upstream of the filter.

FIG.2

FIG.1

LEAK DETECTOR

EXHAUST

0165342

1/1

European Patent
Office

**EUROPEAN SEARCH REPORT**

0165342
Application number

EP 84 20 0743

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 441 123 (LEYBOLD-HERAEUS GMBH) <br> * Claims 1,5,10; figure 3 * | 1 | G 01 M 3/20 |
| A | DD-A- 112 690 (D. HUEBNER et al.) | 1 | |
| A | US-A-3 578 758 (T.L. ALTSHULER) | 1,3 | |

| | |
|---|---|
| | TECHNICAL FIELDS SEARCHED (Int. Cl.4) |
| | G 01 M 3/20 |

The present search report has been drawn up for all claims

| Place of search | Date of completion of the search | Examiner |
|---|---|---|
| BERLIN | 27-02-1985 | KOEHN G |